# EUROPEAN PATENT SPECIFICATION

(11) **EP 1 686 531 B1**
(45) Date of publication and mention of the grant of the patent: **25.04.2018**
(21) Application number: 05001703.7
(22) Date of filing: 27.01.2005
(51) Int. Cl.: G06T 3/00

(54) **A method, a software product and an electronic device for generating an image composition**
Verfahren, Vorrichtung und Programm zur Zusammenstellung von Bildern.
Appareil, procédé et logiciel de composition d'images.

(43) Date of publication of application: 02.08.2006
(73) Proprietor: QUALCOMM Incorporated, San Diego, CA 92121-1714 (US)
(72) Inventor: Clemens, Gerald, 80339 München (DE); Lucas, Carlos, 81549 München (DE)
(74) Representative: WP Thompson

(56) References cited:
- EP-A- 0 734 155
- EP-A- 1 422 660
- WO-A-2004/066631
- US-A1- 2004 150 641
- MANN S ET AL: "ON BEING 'UNDIGITAL' WITH DIGITAL CAMERAS: EXTENDING DYNAMIC RANGE BY COMBINING DIFFERENTLY EXPOSED PICTURES" FINAL PROGRAM AND ADVANCE PRINTING OF PAPERS. ANNUAL CONFERENCE. IMAGING ON THE INFORMATION SUPERHIGHWAY, May 1995 (1995-05), pages 442-448, XP000933963

## Description

### Field of the invention

The invention relates to methods, program products and electronic products for adding a digital image or part thereof to an image composition.

### Background art

Panoramic image capturing is gaining popularity especially among digital camera users. By capturing a larger portion of the visual field to an image composition than would be in a single image, the visual impression gained through the image can be improved. Furthermore, the information content in the image composition is increased.

Successive, separately recorded images can be joined together in a post-recording step, sometimes referred to as stitching. There are some software tools for this purpose on the market compatible with standard PCs. This is nevertheless rather impractical and elaborate.

EP 1,422,660 relates to a method of obtaining an extended dynamic range panorama of a scene from a plurality of limited dynamic range images captured by an image sensor in a digital camera.

Another, more convenient method for creating image compositions has been described in published patent application EP 0 884 897 A1, wherein appending images to an image composition is performed in real time during the recording of the images. Movement vectors obtained from movement analysis of patterns detected by a pattern matching algorithm are applied to succeeding images or parts thereof in order to generate a continuous image composition. In this manner, an image composition can be created while the user sweeps the digital camera over the scenery to be recorded. This method is below referred to as Real Time Stitching RTS.

The selection of exposure parameters of individual images has a large impact on the quality of the resulting image composition.

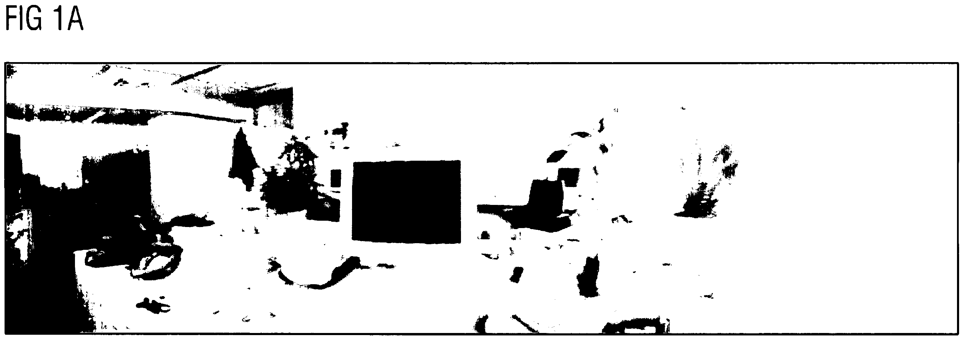

Figure 1A shows an image composition obtained using the RTS with exposure parameters frozen to those of the first image. As can be seen, even though improving the easiness of obtaining an image composition, by using the RTS with frozen exposure parameters, brighter and darker areas cannot be recorded with a good enough quality. The area around the window is overexposed when the sweeping is started from the darker area on left.

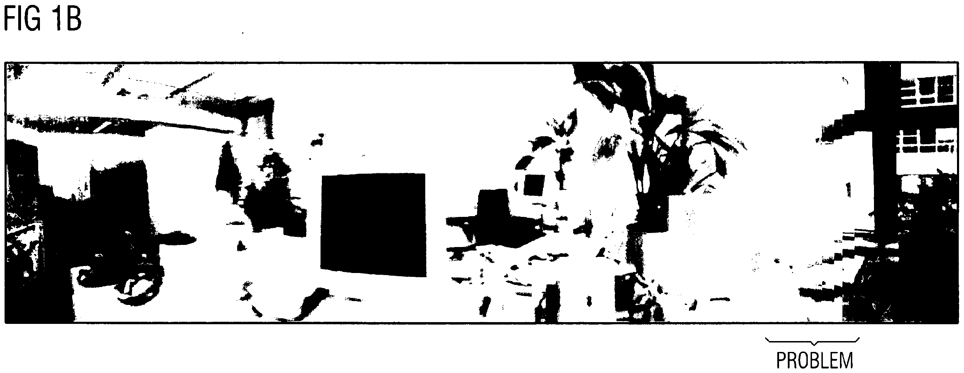

Figure 1B shows an image composition where the exposure of the digital images has been controlled by an Automatic Luminance Control ALC function in the digital camera. In order to keep the brightness constant, software in the digital camera uses a limit defining how fast the exposure control circuit is allowed to change some of the exposure parameters in the control loop. When the brightness or illumination of the scenery that is being photographed is constant, the resulting image compositions would be of relatively good quality. Nevertheless, when there are brighter and darker areas - causing the ALC to modify exposure parameters so that they change during the recording - that should be included in the same image composition, the resulting image composition may suffer from problems as can be seen on the right hand side of Figure 1B

The problem is encountered in the case when the lightning conditions or brightness of the scenery change during the recording of digital images which are going to be added to the image composition, causing some of the digital images to be exposed differently from others. Differently exposed images cause the pattern detection algorithm to fail, leading to an erroneous detection of the movement vector and therefore also parts of digital images are erroneously added to the image composition.

### Summary of the invention

If light conditions change during recording digital images, this may cause exposure parameters to change between recording successive images. As a consequence, the relation of the luminance values in successive images may change drastically, leading to erroneous results from simple pattern recognition methods. For this reason, the movement search tends to give erroneous results, leading to erroneous image composition.

Even though the movement vector search still mathematically works correctly, the changing exposure parameters may cause the luminance or contrast values of the successive digital images not being comparable.

As set out in claim 1, one object of the invention is a new method for generating an image composition by adding a digital image or part thereof to an image composition. Dependent claims 2 to 7 describe various advantageous embodiments of the invention.

Further objects of the invention are to bring out a software product, and an electronic device, as set out in claims 8 to 10.

### Advantages of the invention

If the movement between a first digital image and a second digital image is determined using a representation of the first digital image and a representation of the second digital image, wherein a property of each of the first and the second representation has been changed by compensating for at least one difference between at least one exposure parameter of the respective digital images and at least one exposure parameter of a digital reference image, and the movement is then used to add the second digital image or part thereof to the image composition, erroneous stitching in an image composition resulting may be better avoided.

Especially useful the invention is if the said property comprises luminance, then some stitching problems resulting from automatic luminance control used in capturing the digital images from which the image composition is made can be avoided.

When the step of determining the movement comprises the step of comparing sums of squared differences between luminance values of pixels in areas of the representation of the first digital image and areas of the representation of the second digital image, a simple algorithm can be used in determining the movement. This facilitates use of devices not offering a tremendous computing power.

### List of Figures

In the following, the invention is described in more detail with reference to examples shown in Figures 3A to 5 of the appended drawings, of which:
Figure 1A shows an image composition recorded using the RTS without ALC;
Figure 1B shows an image composition recorded using the RTS with ALC;
Figure 2 shows some functional blocks of a digital camera;
Figure 3A shows some prior art method steps for image composition;
Figure 3B illustrates the principle of composing images;
Figure 4 shows the method depicted in Figure 3A accomplished with method steps according to the invention; and
Figure 5 shows an image composition recorded using the RTS with ALC, wherein movement vectors have been determined using a pattern recognition method to a representation of digital images that have been compensated for a difference between at least one parameter in the second and first sets of exposure parameters.

Same reference numerals refer to similar objects throughout the Figures.

### Detailed description

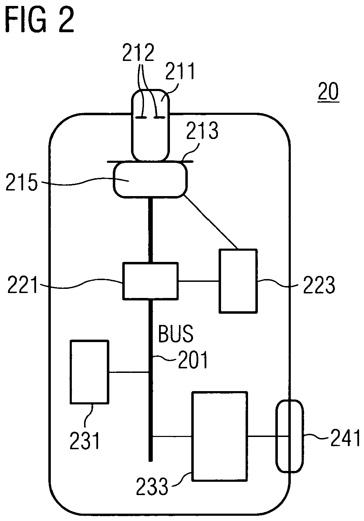

Figure 2 shows some functional blocks of a digital camera 20.

The digital camera 20 comprises a lens 211 further comprising an iris 212, and an image pickup device 215. The image pickup device 215, especially a solid-state image pickup device, may further comprise a hold/gain control circuit, an A/D converter, an image signal processing circuit 221, an iris driving section, an iris driving circuit, a timing generation circuit, a luminance level detector, an exposure control circuit 213, a device control circuit 221, an operation section 241 and a recording image signal processing circuit 231. Some of these components have been omitted from Figure 2 but the skilled person appreciates that a more detailed description of the functional blocks of a digital camera, together with a description of their inter-working, can be found can be found in EP 1473 930 A1, for example.

Different blocks of the digital camera 20 are preferably interconnected by using a connection bus 201. The digital camera 20 preferably comprises memory 223.

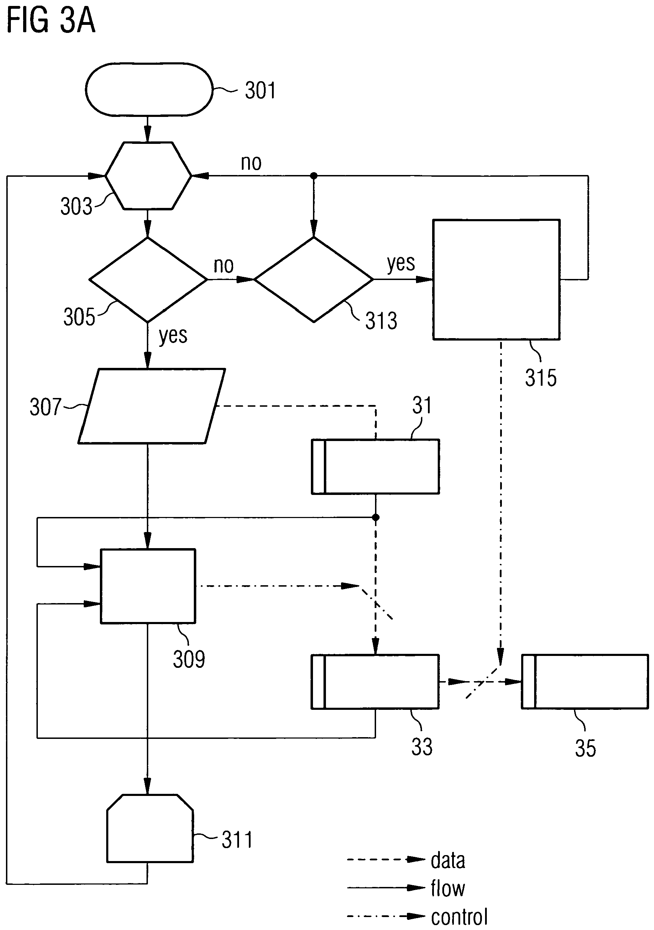

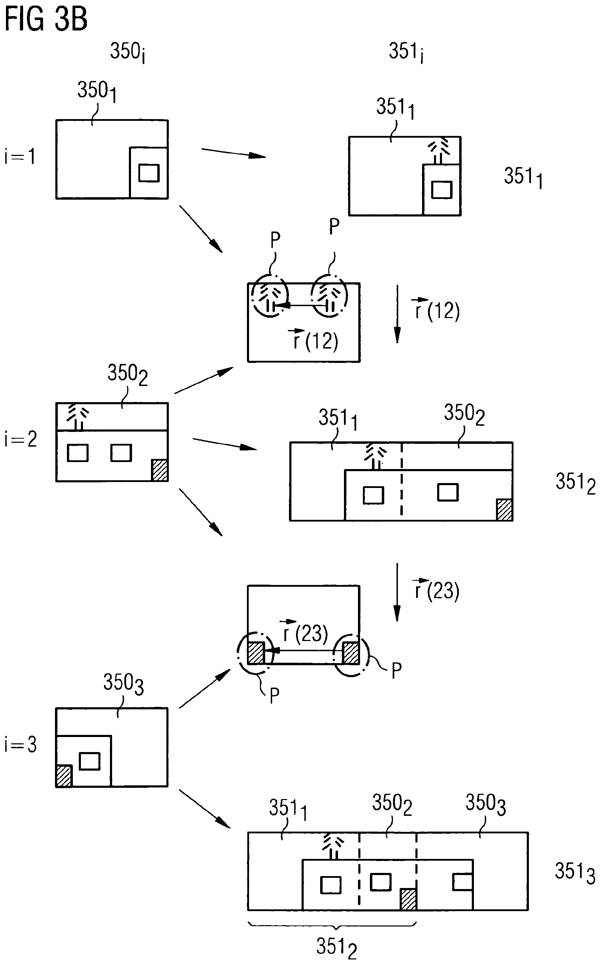

Figure 3A shows some method steps of a prior art method that has been used for adding at least a part of a digital image to an image composition. Using such a method is here referred to as using the RTS algorithm. In the following, the method steps are shortly described in more detail with reference to illustration in Figure 3B. The example describes the digital camera being scanned from left to right only, but for image compositions that expand to other directions same principles follow analogously.

Method steps 307-311 are preferably executed in the recording image processing circuit 231. Method steps 301 and 303 are preferably executed in the device control circuit 221.

In step 301, the device control circuit 221 reserves some memory 223 to hold the image composition 351ⱼ that is going to be created. This memory space 33 is hereafter called *wideImgBuffer.* In step 301, the device control circuit 221 furthermore reserves some part of the memory 223 to hold a digital image 350ᵢ which will be received from the image pickup device 215 or from the memory 223. This memory space 31 is hereafter called *"input image buffer"* or *inpImgBuffer.*

At step 303 the user of the digital camera 20 activates the operation section 241, e.g. by pressing a control key of the digital camera 20, which as a result activates a program at the device control circuit 221.

In step 307, the first digital image 350₁ is received from the image pickup device 215 and copied to *inpImgBuffer.* When step 309 is performed for the first time, the following method steps are performed: The digital image 350ᵢ in in*pImgBuffer* is placed to the very left of the *wideImgBuffer.* The center point of the digital image 350ᵢ is stored as position Pᵢ referring to the image composition 351ᵢ.

In step 307 the next digital image 350₂ is received from the image pickup device 215 and stored in the *inpImgBuffer.* In step 309 when carried out for the second time or later, digital image 350₂ is compared with a copy of the earlier digital image 350₁ in *wideImgBuffer* in order to find the movement vector **r₁₂** between the center of input image 350₂ and the previously stored position P in the image composition 351₁ in *wideImgBuffer.*

If the movement vector **r₁₂** is unequal to zero, the digital image 350₂ in *inpImgBuffer* is appended to the image composition 351₁ in *wideImgBuffer* at position P₂ (= P₁ - **r₁₂**) which will be stored in memory 223.

In step 311, the control is returned to step 303. In step 305 it is checked, whether the image composition is still to be continued. If yes, steps 307 and 309 are repeated.

In the opposite case, in step 313 it is checked that the *wideImgBuffer* is not empty. If it is empty, the control is returned to step 303. Otherwise, in step 315 the resulting image composition 351₂ is stored in the file system 35 and/or displayed.

Generalized, the position Pᵢ of a pattern in digital image 350ᵢ is compared with the position Pᵢ₋₁ of the same pattern in an earlier digital image 350ᵢ₋₁ in order to obtain a movement vector **r₍ᵢ₋₁₎ᵢ.** As an alternative, the movement vector **r₍ᵢ₋₁₎ᵢ** could be obtained in an analogous manner between patterns in the digital image 350ᵢ and in the obtained image composition 351ᵢ₋₁.

The movement vector **r₍ᵢ₋₁₎ᵢ** denotes the displacement between digital images 350ᵢ₋₁ and 350ᵢ. It can be found using the sum of absolute differences SAD algorithm. In the SAD algorithm, a suitable cut-out region R in the image composition 351ᵢ₋₁ that is smaller than the size of the digital image 350ᵢ is moved by applying a predefined pattern, such as a grid, over the digital image 350ᵢ. For every position during this movement the SAD is calculated for the cut-out region R.

The SAD for the cut-out region R is computed by subtracting luminance values in the image composition 351ᵢ₋₁ from the luminance in the digital image 350ᵢ for the overlapping pixels.

The absolute values of the differences are summed. The centre point of the region Rᵢ delivering the smallest SAD value is selected as the position Pᵢ that is used in calculating the movement vector **r₍ᵢ₋₁₎ᵢ.** The benefit of using the SAD algorithm is that it is a very simple algorithm and does not demand excessive computation power. It is rather efficient when the differences in illumination are rather small between digital images that are to be compared with each other.

Various parameters can be set in the digital camera 20 to influence exposure and thereby to change luminance values of recorded digital images. In particular, shutter speed (exposure time), and iris aperture, luminance gain (digital and/or analogue) are of importance. Furthermore, frame rate and ALC latency may affect the resulting digital image. These parameters are hereafter referred to with the term exposure parameters.

The exposure parameters can be set either manually or automatically by a control loop of the digital camera 20. Moreover, the control loop can be frozen, so that current parameters stay unchanged - this is called "ALC is locked" - until unfrozen again.

In other words: as long as exposure parameters while recording digital images that are used by the RTS algorithm stay the same, the algorithm works well because all digital images have the same relation to the previous digital image in terms of exposure.

According to the first aspect of the invention, instead of using the digital image 350ᵢ received from the image pick-up device 215 for the determination of the movement vector **r₍ᵢ₋₁₎ᵢ,** a representation 350ᵢ' of the digital image 350ᵢ is used. The representation 350ᵢ' is obtained by compensating digital image 350ᵢ for a difference between one or more exposure parameters in the set pᵢ of exposure parameters associated with that digital image 350ᵢ and those in the set p₁ of the first digital image 350₁.

For performing the compensation, in the representation 350ᵢ' of the digital image 350ᵢ a property in the digital image 350ᵢ is changed by compensating for an effect of at least one exposure parameters in the set pᵢ of exposure parameters that is different from that in the set of exposure parameters p₁ of the first digital image 350₁. Preferably the property is luminance but it can be either alone or in combination also contrast.

As a result, after the compensation the luminance values of the representation 350ᵢ' are comparable to those of a presentation 350ᵢ₋₁' of an earlier digital image 350ᵢ₋₁ which may be any earlier digital image, including digital image 350₁. The representation 350ᵢ' then substitutes the digital image 350ᵢ and representation 350ᵢ₋₁' substitutes the digital image 350ᵢ₋₁ for the RTS algorithm for the purpose of determining the movement. As an alternative, if the RTS is applied on 351ᵢ₋₁, then the representation 351ᵢ₋₁' substitutes image composition 351ᵢ₋₁ for the RTS algorithm.

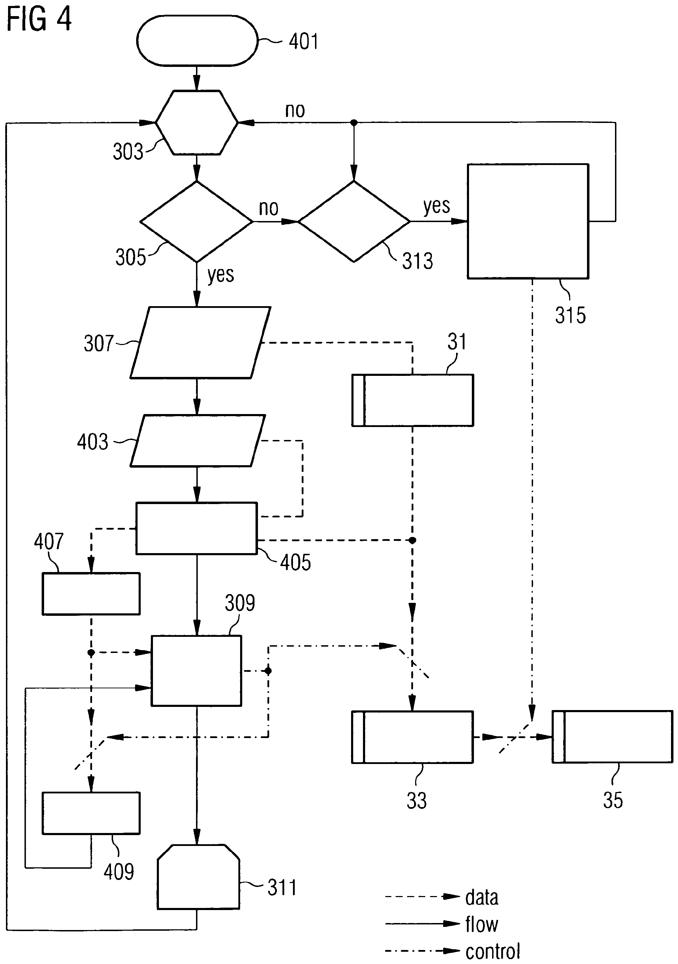

The representation 350ᵢ' of digital image 350ᵢ is appended to the representation 351ᵢ₋₁' of image composition 351ᵢ₋₁ that is used in the RTS algorithm
In the following, the method steps shown in Figure 4 in addition to those already discussed with Figure 3A are described in more detail.

In step 401, in addition to step 301, also a second image memory of the same size, called *"modified image composition buffer"* or *modWideImgBuffer* is reserved.

In step 403, a set pᵢ of exposure parameters is read from the memory 223, into which the exposure control circuit 213 has stored them at the time of recording the digital image 350ᵢ.

In step 405 compensation for the effect of the difference in exposure parameters pᵢ to exposure parameters p_{c} (averaged exposure parameters from the image composition 351ᵢ₋₁), pᵢ₋₁ (exposure parameters for the previous digital image 350ᵢ₋₁), or to exposure parameters p₁ (exposure parameters of the first digital image 350₁) is performed. The digital image 350ᵢ in the *inpImgBuffer* is left unchanged, the representation 350ᵢ' is stored in *modInpImgBuffer.* The set pᵢ of exposure parameters is stored in memory 223 by the image processing circuit 221 for further processing. In a similar manner, the set p_{c} of exposure parameters comprising averaged exposure parameters can be updated.

The representation 350ᵢ. of digital image 350ᵢ is added with the representation 351ᵢ₋₁' of image composition 351ᵢ₋₁ to a new representation 351ᵢ' of image composition 351ᵢ and then copied into *modWideImgBuffer.*

The representation 350ᵢ' of digital image 350ᵢ stored in the *modInpImgBuffer* is correlated, preferably by using the SAD algorithm, with the representation 351ᵢ₋₁' of image composition 351ᵢ₋₁ stored in *modWideImgBuffer* in order to find the movement vector **r₍ᵢ₋₁₎ᵢ** of a pattern P in the representation 351ᵢ' of image composition 351ᵢ.

If the movement vector **r₍ᵢ₋₁₎ᵢ** is unequal to zero, the digital image 350ᵢ in *inpImgBuffer* is appended to the image composition 351ᵢ₋₁ in *wideImgBuffer* so that a new image composition 351ᵢ is obtained. The movement vector **r₍ᵢ₋₁₎ᵢ** is used in the appending. The representation 351ᵢ' of digital image 350ᵢ' is appended to the representation 351ᵢ₋₁' of image composition 351ᵢ₋₁ in *modInpImgBuffer* to a new representation 351ᵢ' of image composition 351ᵢ and stored into *modWideImgBuffer.* The same movement vector **r₍ᵢ₋₁₎ᵢ** is used in the appending.

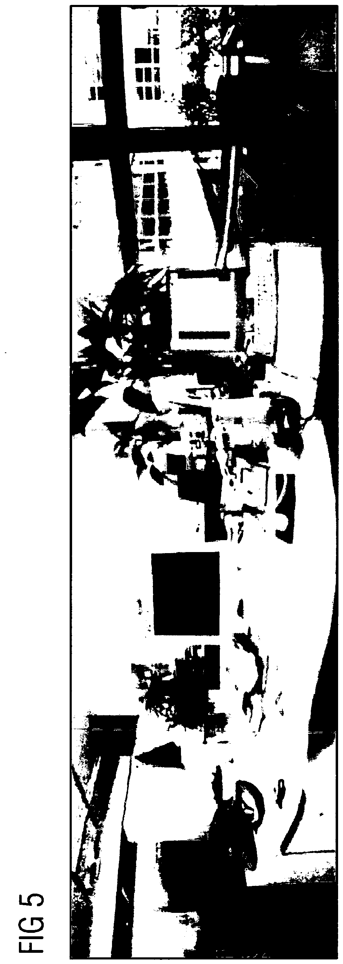

Figure 5 shows an image composition recorded using the RTS with ALC, wherein movement vectors **r₍ᵢ₋₁₎ᵢ** have been determined using a pattern recognition method to representations 350ᵢ' of digital images 350ᵢ which have been compensated for a difference between at least one parameter in two sets of exposure parameters, namely pᵢ and pᵢ₋₁ or p_{c}.

If the compensation is not performed in real time, sets pⱼ (j=1, 2, ..., max) of exposure parameters can be stored with corresponding digital images 350ⱼ, to which the method is then applied later on. As a further alternative, it is also possible to generate a representation 350ᵢ' after picking up a digital image 350ᵢ and then detect the movement **r₍ᵢ₋₁₎ᵢ** which is stored together with coordinates of the area in image composition 351ᵢ₋₁ to which the digital image 350ᵢ or part thereof is added after finishing capturing all digital images 350ⱼ.

Even though the invention has been described by way of examples, it is not limited to the scope of these, but to be understood with the scope of the patent claims. In particular, the functional blocks of the digital camera 20 in which particular method steps are performed are not intended to limit the invention but can be varied by a person skilled in the art.

## Claims

1. A computer implemented method of generating an image composition (351ᵢ) by adding a digital image (350ᵢ) or part thereof to an image composition (351ᵢ₋₁), comprising the steps of:
- determining movement (r₍ᵢ₋₁₎ᵢ) between a first digital image (350ᵢ₋₁) and a second digital image (350ᵢ) using a representation (350ᵢ₋₁') of the first digital image (350ᵢ₋₁) obtained by compensating the first digital image (350ᵢ₋₁) for at least one exposure parameter (pᵢ₋₁) and a representation (350ᵢ') of the second digital image (350ᵢ') obtained by compensating the second digital image (350ᵢ) for at least one exposure parameter (pᵢ), wherein:
a property of each of the first and the second representation (350ᵢ₋₁'; 350ᵢ') has been changed by compensating for at least one difference between the at least one exposure parameter (pᵢ₋ₗ; pᵢ) of the respective digital images (350ᵢ₋ₗ 350ᵢ) and at least one exposure parameter (pₗ) of a digital reference image (350₁); and
- using the movement (r₍ᵢ₋₁₎ᵢ) to add the second digital image (350ᵢ) or part thereof to the image composition (350ᵢ).

2. A method according to claim 1, wherein: the said property comprises luminance.

3. A method according to claim 2, wherein: the step of determining the movement (r₍ᵢ₋₁₎ᵢ) comprises the step of comparing sums of absolute or squared differences between luminance values of pixels in areas of the representation (350ᵢ₋₁';) of the first digital image (350ᵢ₋₁) and areas of the representation (350ᵢ') of the second digital image (350ᵢ).

4. A method according to any one of the preceding claims, wherein: the said property comprises contrast or brightness.

5. A method according to any one of the preceding claims, wherein: said at least one exposure parameter (pᵢ) comprises a representation of iris aperture or a parameter defined thereof.

6. A method according to any one of the preceding claims, wherein: said at least one exposure parameter (pᵢ) comprises a representation of exposure time or a parameter defined thereof.

7. A method according to any one of the preceding claims, wherein: said at least one exposure parameter (pᵢ) comprises a representation of luminance gain or a parameter defined thereof.

8. A software product comprising: software means adapted, when executed in a processing unit, to carry out the method steps of claim 1 or 7.

9. An electronic device (20),
- adapted to: carry out the method steps of any one of the preceding method claims.

10. An electronic device (20), comprising:
i) a processing unit (231); and
ii) a software product according to claim 8.

11. An electronic device (20) according to claim 9 or 10, wherein: said electronic device (20) comprises a digital camera.

## Patentansprüche

1. Computerimplementiertes Verfahren zum Erzeugen einer Bildzusammensetzung (351ᵢ) durch Hinzufügen eines digitalen Bildes (350ᵢ) oder eines Teils davon zu einer Bildzusammensetzung (351ᵢ₋₁), das die folgenden Schritte beinhaltet:
- Bestimmen von Bewegung (r₍ᵢ₋₁₎ᵢ) zwischen einem ersten digitalen Bild (350ᵢ₋₁) und einem zweiten digitalen Bild (350ᵢ) anhand einer Darstellung (350ᵢ₋₁') des ersten digitalen Bildes (350ᵢ₋₁), erhalten durch Kompensieren des ersten digitalen Bildes (350ᵢ₋₁) im Hinblick auf wenigstens einen Belichtungsparameter (pᵢ₋₁), und einer Darstellung (350ᵢ') des zweiten digitalen Bildes (350ᵢ'), erhalten durch Kompensieren des zweiten digitalen Bildes (350ᵢ) im Hinblick auf wenigstens einen Belichtungsparameter (pᵢ), wobei:
eine Eigenschaft von jeder der ersten und der zweiten Darstellung (350ᵢ₋₁; 350ᵢ') durch Kompensieren im Hinblick auf wenigstens eine Differenz zwischen dem wenigstens einen Belichtungsparameter (pᵢ₋₁; pᵢ) der jeweiligen digitalen Bilder (350ᵢ₋₁ 350ᵢ) und wenigstens einem Belichtungsparameter (pᵢ) eines digitalen Referenzbildes (350₁) geändert wurde; und
- Benutzen der Bewegung (r₍ᵢ₋₁₎ᵢ) zum Hinzufügen des zweiten digitalen Bildes (350ᵢ) oder eines Teils davon zu der Bildzusammensetzung (350ᵢ).

2. Verfahren nach Anspruch 1, wobei: die genannte Eigenschaft Luminanz umfasst.

3. Verfahren nach Anspruch 2, wobei: der Schritt des Bestimmens der Bewegung (r₍ᵢ₋₁₎ᵢ) den Schritt des Vergleichens von Summen von absoluten oder quadratischen Differenzen zwischen Luminanzwerten von Pixeln in Bereichen der Darstellung (350ᵢ₋₁') des ersten digitalen Bildes (350ᵢ₋₁) und Bereichen der Darstellung (350ᵢ') des zweiten digitalen Bildes (350ᵢ) beinhaltet.

4. Verfahren nach einem der vorherigen Ansprüche, wobei: die genannte Eigenschaft Kontrast oder Helligkeit umfasst.

5. Verfahren nach einem der vorherigen Ansprüche, wobei: der genannte wenigstens eine Belichtungsparameter (pᵢ) eine Darstellung von Irisblende oder einen definierten Parameter davon beinhaltet.

6. Verfahren nach einem der vorherigen Ansprüche, wobei: der genannte wenigstens eine Belichtungsparameter (pᵢ) eine Darstellung von Belichtungszeit oder einen definierten Parameter davon umfasst.

7. Verfahren nach einem der vorherigen Ansprüche, wobei: der genannte wenigstens eine Belichtungsparameter (pᵢ) eine Darstellung von Luminanzgewinn oder einen definierten Parameter davon umfasst.

8. Softwareprodukt, das Folgendes umfasst: Softwaremittel, ausgelegt, bei Ausführung in einer Verarbeitungseinheit, zum Durchführen der Verfahrensschritte nach Anspruch 1 oder 7.

9. Elektronisches Gerät (20),
- ausgelegt zum: Durchführen der Verfahrensschritte nach einem der vorherigen Verfahrensansprüche.

10. Elektronisches Gerät (20), das Folgendes umfasst:
i) eine Verarbeitungseinheit (231); und
ii) ein Softwareprodukt nach Anspruch 8.

11. Elektronisches Gerät (20) nach Anspruch 9 oder 10, wobei: das genannte elektronische Gerät (20) eine digitale Kamera umfasst.

## Revendications

1. Un procédé mis en oeuvre par ordinateur de génération d'une composition d'image (351ᵢ) par l'ajout d'une image numérique (350ᵢ) ou d'une partie de celle-ci à une composition d'image (351ᵢ₋₁), comprenant les opérations suivantes :
- la détermination d'un déplacement (r₍ᵢ₋₁₎ᵢ) entre une première image numérique (350ᵢ₋₁) et une deuxième image numérique (350ᵢ) au moyen d'une représentation (350ᵢ₋₁') de la première image numérique (350ᵢ₋₁) obtenue par la compensation de la première image numérique (350ᵢ₋₁) d'au moins un paramètre d'exposition (pᵢ₋₁) et une représentation (350ᵢ') de la deuxième image numérique (350ᵢ') obtenue par la compensation de la deuxième image numérique (350ᵢ) d'au moins un paramètre d'exposition (pᵢ), où :
une propriété de chacune des première et deuxième représentations (350ᵢ₋₁'; 350ᵢ') a été modifiée par la compensation d'au moins une différence entre le au moins un paramètre d'exposition (pᵢ₋₁; pᵢ) des images numériques respectives (350ᵢ₋₁ 350ᵢ) et au moins un paramètre d'exposition (pᵢ) d'une image numérique de référence (350₁), et
- l'utilisation du déplacement (r₍ᵢ₋₁₎ᵢ) de façon à ajouter la deuxième image numérique (350ᵢ) ou une partie de celle-ci à la composition d'image (350ᵢ).

2. Un procédé selon la Revendication 1, où : ladite propriété comprend une luminance.

3. Un procédé selon la Revendication 2, où : l'opération de détermination du déplacement (r₍ᵢ₋₁₎ᵢ) comprend l'opération de comparaison de sommes de différences absolues ou au carré entre des valeurs de luminance de pixels dans des zones de la représentation (350ᵢ₋₁') de la première image numérique (350ᵢ₋₁) et des zones de la représentation (350ᵢ') de la deuxième image numérique (350ᵢ).

4. Un procédé selon l'une quelconque des Revendications précédentes, où : ladite propriété comprend un contraste ou une luminosité.

5. Un procédé selon l'une quelconque des Revendications précédentes, où : ledit au moins un paramètre d'exposition (pᵢ) comprend une représentation d'ouverture d'iris ou un paramètre défini de celle-ci.

6. Un procédé selon l'une quelconque des Revendications précédentes, où : ledit au moins un paramètre d'exposition (pᵢ) comprend une représentation de durée d'exposition ou un paramètre défini de celle-ci.

7. Un procédé selon l'une quelconque des Revendications précédentes, où : ledit au moins un paramètre d'exposition (pᵢ) comprend une représentation d'un gain de luminance ou un paramètre défini de celui-ci.

8. Un produit logiciel comprenant : moyen logiciel adapté, lorsqu'il est exécuté dans une unité de traitement, de façon à exécuter les opérations de procédé selon les Revendications 1 ou 7.

9. Un dispositif électronique (20),
- adapté de façon à : exécuter les opérations de procédé selon l'une quelconque des Revendications de procédé précédentes.

10. Un dispositif électronique (20), comprenant :
i) une unité de traitement (231), et
ii) un produit logiciel selon la Revendication 8.

11. Un dispositif électronique (20) selon la Revendication 9 ou 10, où : ledit dispositif électronique (20) comprend une appareil de prise de vues numérique.
